# EUROPÄISCHE PATENTSCHRIFT

(11) **EP 1 233 173 B1**
(45) Veröffentlichungstag und Bekanntmachung des Hinweises auf die Patenterteilung: **23.03.2005**
(21) Anmeldenummer: 02002935.1
(22) Anmeldetag: 09.02.2002
(51) Int. Cl.: F02M 37/22, B01D 36/00

(54) **Filterelement für Kraftstoffe**
Filter element for fuels
Elément filtrant pour carburants

(30) Priorität: 15.02.2001 DE 10106950
(43) Veröffentlichungstag der Anmeldung: 21.08.2002
(73) Patentinhaber: ROBERT BOSCH GMBH, 70442 Stuttgart (DE)
(72) Erfinder: Benitez, Cesar Garcia, 28028 Madrid (ES); Gil, Teresa Serrano, San Sebastian de los Reyes, 28700 Madrid (ES)

(56) Entgegenhaltungen:
- EP-A- 0 385 113
- DE-A- 4 239 099
- US-A- 3 502 218
- US-A- 4 522 712

## Beschreibung

### Stand der Technik

Die Erfindung geht aus von einem Filterelement für Kraftstoffe nach der im Oberbegriff des Anspruchs 1 näher angegebenen Gattung.

Es ist schon ein solches Filterelement für Dieselkraftstoff aus der DE 42 39 099 A1 bekannt, das in einem trennbaren Gehäuse austauschbar angeordnet ist, so daß es getrennt und umweltfreundlich entsorgt werden kann. Das als radial durchströmter Sterneinsatz ausgebildete Filterelement ist dabei auf einem in ein becherförmiges Gehäuseteil eingesetzten Trägerelement gelagert und wird von diesem und dem Deckel zwischen Schmutzseite und Reinseite abgedichtet. Im Trägerelement ist zusätzlich ein Umlenkschirm integriert, über den auf der Reinseite abströmender Kraftstoff über einen rohrförmigen Kanal zu einem Ablaufanschluß im Deckel geführt wird. Dabei bildet das Gehäuseteil selbst unterhalb des Umlenkschirms einen Wasserspeicherraum, der über eine gehäusefeste Ablaßschraube nach außen entleerbar ist. Obwohl hier beim Erneuern des verschmutzten Filterelements der Austausch von Material möglichst gering gehalten wird, ist bei diesem Filterelement doch ungünstig, daß dabei das Wasser und eventuell dort abgelagerte Verunreinigungen im Wasserspeicherraum verbleiben können. Der Wasserspeicherraum muß erst in einem zusätzlichen Vorgang mit Hilfe einer Ablaßschraube entleert werden. Auch erfordert dieses Filterelement zwei Dichtstellen zwischen Schmutzseite und Reinseite, wobei die Dichtstelle am Deckel bei der Montage des Deckels von außen nicht mehr einsehbar und überprüfbar ist. Auch baut das Flüssigkeitsfilter mit dem radial durchströmten Sterneinsatz relativ aufwendig. Der zentrierend in den Sterneinsatz greifende Deckel erfordert eine sorgfältige Montage.

Ferner ist aus der EP 0 385 113 A2 ein Flüssigkeitsfilter für Dieselkraftstoff mit einem austauschbaren Filterelement bekannt, das in einem trennbaren Gehäuse angeordnet ist und am Filterelement unmittelbar einen Wasserspeicherraum aufweist. Hier ist jedoch das Filterelement als axial durchströmtes Wickelelement aufgebaut, das mit einem radial durchströmten Sternfilterelement nicht vergleichbar ist. Auch muß hier zuerst die Wasserablaßschraube entfernt werden, bevor das Wickelelement bei geöffnetem Deckel aus dem becherförmigen Gehäuseteil ausgebaut werden kann. Im Wasserspeicherraum abgeschiedene Verunreinigungen werden daher beim Austausch eines verschmutzten Filterelements nicht automatisch mit entsorgt.

### Vorteile der Erfindung

Das erfindungsgemäße Filterelement für Kraftstoffe mit den kennzeichnenden Merkmalen des Hauptanspruchs hat demgegenüber den Vorteil, daß hier bei einem radial durchströmten Sternfilterelement unmittelbar ein Wasserspeicherraum integriert ist. Beim Austauschen des Filterelements wird daher der aus Filterelement und Speichergehäuse bestehende Einsatzmodul als Ganzes ausgetauscht, so daß auch in dem nach außen geschlossenen Wasserspeicherraum abgelagerter Schmutz mit entfernt wird. Es können daher kein Wasser bzw. keine abgelagerten Verunreinigungen auf die Reinseite des Filterelements gelangen bzw. nicht im Gehäuse verbleiben. Der Einsatzmodul ermöglicht eine einfache und kompakte Bauweise und läßt sich kostengünstig herstellen. Zudem erleichtert er die Handhabung beim Austausch verschmutzter Filterelemente ,und er ermöglicht eine umweltfreundliche Entsorgung.

Durch die in den Unteransprüchen aufgeführten Maßnahmen sind vorteilhafte Weiterbildungen und Verbesserungen des im Hauptanspruch angegebenen Filterelements möglich. Besonders zweckmäßig sind Ausführungen nach den Ansprüchen 2 bis 6, welche eine einfach herstellbare und platzsparende Bauart begünstigen. Gemäß den Ausführungen nach den Ansprüchen 7 und 8 wird der Dichtungsaufwand bei solchen Filterelementen gering gehalten; zudem läßt sich durch diese Bauweise das Eindringen von Schmutz auf die Reinseite beim Auswechseln von Filterelementen möglichst gering halten. In vorteilhafter Weise läßt sich gemäß Anspruch 9 die Funktion der Wasserabscheidung verbessern. Besonders zweckmäßig ist es, wenn das Filterelement gemäß Anspruch 10 ausgeführt wird. Auf diese Weise läßt sich die Funktion des Wasserablassens relativ einfach durchführen. Zudem eignet sich dieses Mittelrohr auch günstig für die Montage eines Wassersensors. Weitere vorteilhafte Ausgestaltungen ergeben sich aus den übrigen Ansprüchen, der Beschreibung sowie der Zeichnung.

### Zeichnung

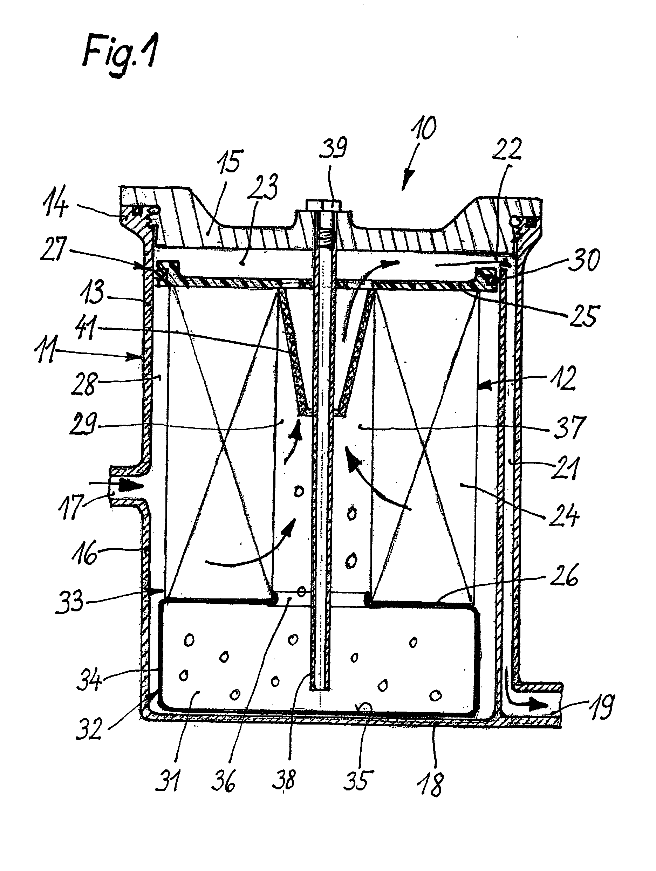

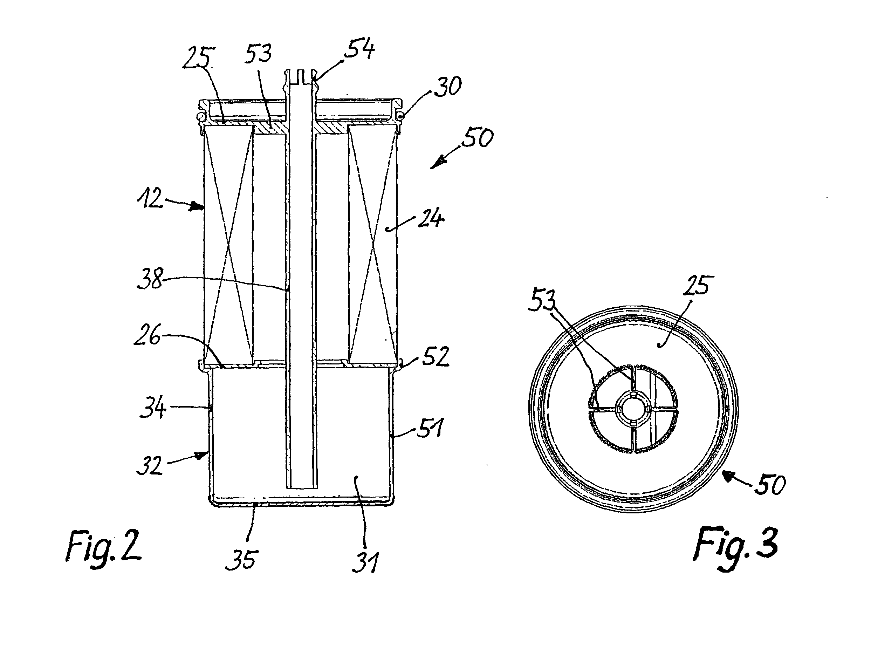

Zwei Ausführungsbeispiele der Erfindung sind in der Zeichnung dargestellt und in der nachfolgenden Beschreibung näher erläutert. Es zeigen Figur 1 einen Längsschnitt durch ein Flüssigkeitsfilter mit einem erfindungsgemäßen Filterelement in sehr vereinfachter Darstellung, Figur 2 einen Längsschnitt durch ein zweites Ausführungsbeispiel des Filterelements in mehr konstruktiver Bauweise und Figur 3 eine Draufsicht auf das Filterelement nach Figur 2.

### Beschreibung der Ausführungsbeispiele

Die Figur 1 zeigt einen Längsschnitt durch ein Flüssigkeitsfilter 10 für Kraftstoffe, wie es beim Reinigen von Dieselkraftstoff verwendet wird. Das Flüssigkeitsfilter 10 ist in stark vereinfachter, schematischer Ausführung dargestellt und weist in einem trennbaren Filtergehäuse 11 ein austauschbar angeordnetes Filterelement 12 auf.

Das Filtergehäuse 11 weist ein becherförmiges Gehäuseteil 13 auf, das an seinem offenen Rand 14 durch einen lösbaren Deckel 15 verschlossen ist. Das becherförmige Gehäuseteil 13 weist in seiner hohlzylindrischen Wand 16 einen Zulaufanschluß 17 auf, während an seinem Boden 18 ein Ablaufanschluß 19 ausgeführt ist. Der Ablaufanschluß 19 steht dabei über einen axial in der Wand 16 verlaufenden Längskanal 21 mit einer Ablauföffnung 22 in Verbindung, die nahe am Deckel 15 und damit oberhalb vom Filterelement 12 in den Innenraum 23 des Gehäuses 11 führt.

In dem Innenraum 23 des Gehäuses 11 ist das Filterelement 12 so angeordnet, daß es zwischen den Zulaufanschluß 17 und den Ablaufanschluß 19 geschaltet ist. Das Filterelement 12 weist einen radial von außen nach innen durchströmten Sterneinsatz 24 auf, der an seinen beiden Stirnseiten durch eine ringförmige obere Endkappe 25 und eine untere Endkappe 26 abgedichtet ist. Dabei bildet die obere Endkappe 25 eine einzige Dichtstelle 27, durch welche das Filterelement 12 im Innenraum 23 des Gehäuses 11 abgedichtet ist und dabei die mit dem Zulaufanschluß 17 verbundene Schmutzseite 28 von der mit dem Ablaufanschluß 19 verbundenen Reinseite 29 trennt. Zu diesem Zweck weist die obere Endkappe 25 an ihrem Außendurchmesser einen Dichtring 30 auf.

Unterhalb des Filterelements 12 ist unmittelbar daran angrenzend ein Wasserspeicherraum 31 angeordnet, dessen Speichergehäuse 32 fest mit dem Filterelement 12 verbunden ist und mit diesem zusammen einen einstückigen, als Ganzes handhabbaren Einsatzmodul 33 bildet. Die untere Endkappe 26 des Filterelements 12 bildet dabei zugleich eine Wand des Speichergehäuses 32, das ferner einen rohrförmigen Abschnitt 34 und eine Bodenplatte 35 aufweist, so daß der Wasserspeicherraum 31 im wesentlichen eine scheibenförmige Form hat. Das Speichergehäuse 32 ist auf diese Weise in sich geschlossen und steht über eine zentrale Öffnung 36, welche von der unteren ringförmigen Endkappe 26 gebildet wird, mit dem als Abströmkanal dienenden, rohrförmigen Innenraum 37 im Sterneinsatz 24 in Verbindung. Das Speichergehäuse 32 ist so ausgeführt, daß es durch seinen Abschnitt 34 im wesentlichen den gleichen Außendurchmesser aufweist wie der Filtereinsatz 24; zudem liegt das Speichergehäuse 32 mit seiner Bodenplatte an dem Boden 18 des Gehäuses 11 an, so daß das Filterelement 12 und damit der Einsatzmodul 33 bei guter Raumausnützung im Filtergehäuse 11 einwandfrei gelagert ist.

Im Deckel 15 des Filtergehäuses 11 ist ein zentral angeordnetes Mittelrohr 38 befestigt, das in axialer Richtung den ganzen Innenraum 37 des Filterelements 12 durchdringt und über die Öffnung 36 in den Wasserspeicherraum 31 hineinragt. Das Mittelrohr 38 endet in geringem Abstand über der Bodenplatte 35 des Speichergehäuses 32. Das Mittelrohr 38 ist im Deckel 15 durch eine Ablaßschraube 39 verschlossen. Ferner ist in dem Innenraum 37 des Sterneinsatzes 24 in dessen oberem Bereich ein wasserabweisender Trenneinsatz 41 angeordnet, der eine kegelige Form aufweist und an seinem großen Durchmesser an der oberen Endkappe 25 anliegt, während er mit seinem kleineren Durchmesser das Mittelrohr 38 umgreift. Dieser Trenneinsatz 41 besteht vorzugsweise aus einem wasserabweisenden Material, um die Wasserabscheidung auf der Reinseite 29 zu verbessern.

Die Wirkungsweise des Flüssigkeitsfilters 10 mit dem austauschbar angeordneten Einsatzmodul 33 wird wie folgt erläutert. Der zu reinigende Dieselkraftstoff strömt über den Zulaufanschluß 17 auf die Schmutzseite 28 im Filtergehäuse 11. Von dort strömt er radial von außen nach innen durch den Sterneinsatz 24 und gelangt gereinigt auf die Reinseite 29. Auf die Reinseite 29 dabei gelangende Wasserteilchen sinken im Innenraum 37 des Sterneinsatzes 24 in Folge ihres größeren spezifischen Gewichts nach unten und gelangen durch die Öffnung 36 in den Wasserspeicherraum 31, wo sich das ausgeschiedene Wasser sammelt. Der im Innenraum 37 des Sterneinsatzes 24 nach oben abströmende, gereinigte Dieselkraftstoff durchströmt den Trenneinsatz 41, der durch sein wasserabweisendes Material die Wasserabscheidung wesentlich unterstützt. Stromabwärts vom Trenneinsatz 41 gelangt der Dieselkraftstoff über die Ablauföffnung 22 und den Längskanal 21 zum Ablaufanschluß 19.

Zum Austausch eines verschmutzten Filterelements 12 wird der Deckel 15 vom becherförmigen Gehäuseteil 13 abgenommen, wonach der Einsatzmodul 33 als Ganzes ausgetauscht werden kann. Durch die Integration von Filterelement 12 mit Speichergehäuse 32 wird beim Austausch des Einsatzmoduls 33 zugleich auch das im Wasserspeicherraum 31 abgeschiedene Wasser und eventuelle Verunreinigungen mit entfernt, so daß kein Schmutz bzw. Wasser im becherförmigen Gehäuseteil 13 verbleibt. Durch die Anordnung der Dichtstelle 27 an der oberen Endkappe 25 in Verbindung mit der Anordnung der Ablauföffnung 22 nahe dem Deckel 15 wird erreicht, daß beim Austauschen des Einsatzmoduls 33 kein Schmutz zum Ablaufanschluß 19 gelangen kann. Das Filterelement 12 mit dem angebauten Speichergehäuse 32 läßt sich dabei einfach und kostengünstig so herstellen, daß es nach dem Austausch umweltgerecht entsorgt werden kann.

Bei dem Flüssigkeitsfilter 10 läßt sich auch im Betrieb bei geschlossenem Filtergehäuse 11 ein Entfernen des abgeschiedenen Wassers erreichen, wozu das vereinfacht dargestellte Mittelrohr 38 benutzt wird. Nach dem Öffnen der Ablaßschraube 39 kann über dieses Mittelrohr 38 ein Wasserablassen aus dem Wasserspeicherraum 31 vorgenommen werden. Das Mittelrohr 38 eignet sich auch dazu, daß in nicht näher gezeichneter Weise am Deckel 15 ein Wassersensor montiert wird, über dessen Signale die Höhe des Wasserstands im Speichergehäuse 32 abfragbar ist.

Die Figur 2 zeigt einen zweiten Einsatzmodul 50 in einer mehr konstruktiven Ausführungsform, der sich vom ersten Einsatzmodul 33 nach Figur 1 wie folgt unterscheidet, wobei gleiche Bauelemente mit gleichen Bezugszeichen versehen sind. Beim Speichergehäuse 32 am zweiten Einsatzmodul 50 bilden der zylindrische Abschnitt 34 und die Bodenplatte 35 ein Topfgehäuseteil 51, das mit seinem freien Rand 52 an der unteren Endkappe 26 dicht befestigt ist. Wie die Figur 2 in Verbindung mit Figur 3 näher zeigt, ist das Mittelrohr 38 über vier radial verlaufende Stege 53 nun fest mit der oberen Endkappe 25 verbunden, so daß das Mittelrohr 38 einen integralen Bestandteil des zweiten Einsatzmoduls 50 bildet. Zum Anschließen an einen nicht näher gezeigten Deckel sind am Mittelrohr 38 an dem aus dem Sterneinsatz 24 herausragenden Ende mehrere Anschlußlaschen 54 ausgebildet. Die obere Endkappe 25 und das Mittelrohr 38 bilden somit ein einstückiges Bauelement, das relativ leicht aus Kunststoff herstellbar ist.

Die Wirkungsweise und das Austauschen des zweiten Einsatzmoduls 50 erfolgen sinngemäß wie beim ersten Einsatzmodul 33.

Selbstverständlich sind an den gezeigten Ausführungsformen Änderungen möglich, ohne vom Gedanken der Erfindung abzuweichen. Obwohl es vorteilhaft ist, beide Anschlüsse an dem becherförmigen Gehäuseteil 13 vorzusehen, kann bei Bedarf der Ablaufanschluß 19 ohne weiteres auch im Deckel 15 angeordnet werden. Bei der aufgezeigten Bauweise des Speichergehäuses 32 läßt sich das becherförmige Gehäuseteil 13 leicht so weiterbilden, daß im Bereich der Bodenplatte 35 bei Bedarf eine zusätzliche Heizeinrichtung angeordnet wird, um bei niedrigen Temperaturen ein Versulzen des Dieselkraftstoffs zu vermeiden.

Während bei den gezeigten Ausführungsformen das Speichergehäuse 32 jeweils unlösbar mit dem Filterelement 12 verbunden ist, kann es bei Bedarf auch zweckmäßig sein, dort eine dichte und feste, aber lösbare Verbindung, wie z.B. eine Schnappverbindung, vorzusehen, um die Entsorgung des Einsatzmoduls weiter zu verbessern.

Beim Einsatzmodul können anstelle des Sterneinsatzes auch andere Bauarten verwendet werden, solange das Filtermaterial ringförmig angeordnet und stirnseitig abgedichtet ist, so daß es radial durchströmt wird.

## Patentansprüche

1. Filterelement (12) für Kraftstoffe, insbesondere Dieselkraftstoff, zum austauschbaren Einbau in das Filtergehäuse (11) eines Flüssigkeitsfilters (10) wo es zwischen einem Zulaufanschluß (17) und einem Ablaufanschluß (19) so einsetzbar ist, daß dessen Reinseite mit einem Wasserspeicherraum (31) Verbindung hat und bei dem das ringförmig angeordnete Filtermaterial radial von außen nach innen durchströmt wird und an beiden Stirnseiten durch ringförmige Endkappen (25, 26) abgedichtet ist, **dadurch gekennzeichnet, daß** der Wasserspeicherraum (31) in einem vom Filtergehäuse (11) getrennten Speichergehäuse (32) angeordnet ist, das am Filterelement (12) unten angebaut ist und daß das Speichergehäuse (32) mit dem Filterelement (12) einen im Filtergehäuse (11) zusammen austauschbar angeordneten Einsatzmodul (33, 50) bildet.

2. Filterelement nach Anspruch 1, **dadurch gekennzeichnet, daß** das Filterelement (12) und das Speichergehäuse (32) unmittelbar aneinandergrenzen, wobei das Speichergehäuse (32) an die untere Endkappe (26) des Filterelements (12) angebaut ist.

3. Filterelement nach Anspruch 1 oder 2, **dadurch gekennzeichnet, daß** das ringförmig angeordnete Filtermaterial ein radial durchströmter Sterneinsatz (24) ist, dessen untere stirnseitige Endkappe (26) zugleich eine ringförmige Wand des Speichergehäuses (32) bildet und eine zentrale Öffnung (36) umschließt, über welche die Reinseite (29) mit dem Wasserspeicherraum (31) Verbindung hat.

4. Filterelement nach Anspruch 3, **dadurch gekennzeichnet, daß** die ringförmige Wand (26) mit einem daran anschließenden rohrförmigen Abschnitt (34) und einer an letztere anschließenden Bodenplatte (35) den Wasserspeicherraum (31) begrenzen, wobei insbesondere der rohrförmige Abschnitt (34) und die Bodenplatte (35) ein Topfgehäuseteil (51) bilden, dessen freier Rand (52) mit der unteren Endkappe (26) dicht und fest verbunden ist.

5. Filterelement nach einem der Ansprüche 1 bis 4, **dadurch gekennzeichnet, daß** der Wasserspeicherraum (31) im wesentlichen die Form einer kreisrunden Scheibe aufweist.

6. Filterelement nach einem der Ansprüche 1 bis 5, **dadurch gekennzeichnet, daß** das Speichergehäuse (32) einen geschlossenen Wasserspeicherraum (31) bildet, der nur über die zentrale Öffnung (36) in der unteren Endkappe (26) zugänglich ist.

7. Filterelement nach einem oder mehreren der Ansprüche 1 bis 6, **dadurch gekennzeichnet, daß** der Einsatzmodul (33, 50) an seinem Außenumfang eine einzige Dichtstelle (27, 30) aufweist, um im Filtergehäuse (11) die mit dem Zulaufanschluß (17) verbundene Schmutzseite (28) von der mit dem Ablaufanschluß (19) verbundenen Reinseite (29) zu trennen.

8. Filterelement nach Anspruch 7, **dadurch gekennzeichnet, daß** die Dichtstelle (27) einen Dichtring (30) aufweist, der an der vom Speichergehäuse (32) entfernt liegenden, oberen, stirnseitigen Endkappe (25) des Filterelements (12) angeordnet ist.

9. Filterelement nach einem der Ansprüche 1 bis 8, **dadurch gekennzeichnet, daß** das ringförmige Filterelement (12) auf seiner Reinseite (29), insbesondere in seinem, dem zentralen Abströmkanal zugeordneten Innenraum (37), einen wasserabweisenden Trenneinsatz (41) aufnimmt.

10. Filterelement nach einem der Ansprüche 1 bis 9, **dadurch gekennzeichnet, daß** ein das ringförmige Filterelement (12) in seiner ganzen axialen Länge durchdringendes Mittelrohr (38) vorgesehen ist, das in den Wasserspeicherraum (31) hineinragt.

11. Filterelement nach Anspruch 10, **dadurch gekennzeichnet, daß** die den Dichtring (30) tragende obere Endkappe (25) und das Mittelrohr (38) einstückig ausgebildet sind.

12. Filterelement nach einem der Ansprüche 1 bis 11, **dadurch gekennzeichnet, daß** es in ein Filtergehäuse (11) eingebaut ist, dessen becherförmiges Gehäuseteil (13) den Zulaufanschluß (17) und insbesondere den Ablaufanschluß (19) aufweist und das durch einen Deckel (15) verschlossen ist.

13. Filterelement nach Anspruch 12, **dadurch gekennzeichnet, daß** das becherförmige Gehäuseteil (13) einen Boden (18) aufweist, an dem die Bodenplatte (35) des Speichergehäuses (32) anliegt.

14. Filterelement nach einem der Ansprüche 1 bis 13, **dadurch gekennzeichnet, daß** das Filterelement (12) und das Speichergehäuse (32) in axialer Richtung gesehen im wesentlichen die gleiche Außenkontur aufweisen.

15. Filterelement nach Anspruch 12, **dadurch gekennzeichnet, daß** im becherförmigen Gehäuseteil (13) eine mit dem Ablaufanschluß (19) verbundene Ablauföffnung (22) angeordnet ist, die in axialer Richtung gesehen oberhalb der Dichtstelle (27) und unterhalb des Deckels (15) liegt.

16. Filterelement nach einem der Ansprüche 1 - 15, **dadurch gekennzeichnet, daß** das Speichergehäuse (32) unlösbar mit dem Filterelement (12) verbunden ist.

## Claims

1. Filter element (12) for fuels, in particular diesel fuel, for exchangeable installation into the filter housing (11) of a liquid filter (10), where it can be inserted between an inflow connection (17) and an outflow connection (19) in such a way that its clean side is connected to a water storage space (31), and in which the annularly arranged filter material has the flow passing through it radially from the outside inwards and is sealed off on both end faces by means of annular end caps (25, 26), **characterized in that** the water storage space (31) is arranged in a storage housing (32) which is separate from the filter housing (11) and which is built on the filter element (12) at the bottom, and **in that** the storage housing (32) forms with the filter element (12) an insert module (33, 50) exchangeably arranged together in the filter housing (11).

2. Filter element according to Claim 1, **characterized in that** the filter element (12) and the storage housing (32) are directly contiguous to one another, the storage housing (32) being built onto the lower end cap (26) of the filter element (12).

3. Filter element according to Claim 1 or 2,
**characterized in that** the annularly arranged filter material is a radial-throughflow star insert (24), the lower end-face end cap (26) of which at the same time forms an annular wall of the storage housing (32) and surrounds a central orifice (36), via which the clean side (29) is connected to the water storage space (31).

4. Filter element according to Claim 3, **characterized in that** the annular wall (26), with a tubular portion (34) adjoining it and with a baseplate (35) adjoining the latter, delimits the water storage space (31), in particular the tubular portion (34) and the basepiate (35) forming a pot-shape housing part (51), the free edge (52) of which is connected sealingly and firmly to the lower end cap (26).

5. Filter element according to one of Claims 1 to 4, **characterized in that** the water storage space (31) is essentially in the form of a circular disc.

6. Filter element according to one of Claims 1 to 5, **characterized in that** the storage housing (32) forms a closed water storage space (31) which is accessible only via the central orifice (36) in the lower end cap (26).

7. Filter element according to one or more of Claims 1 to 6, **characterized in that** the insert module (33, 50) has a single sealing point (27, 30) on its outer circumference, in order, in the filter housing (11), to separate the dirty side (28) connected to the inflow connection (17) from the clean side (29) connected to the outflow connection (19).

8. Filter element according to Claim 7, **characterized in that** the sealing point (27) has a sealing ring (30) which is arranged on the upper end-face end cap (25) of the filter element (12), the said end cap being remote from the storage housing (32).

9. Filter element according to one of Claims 1 to 8, **characterized in that** the annular filter element (12) receives a water-repelling separating insert (41) on its clean side (29), in particular in its inner space (37) assigned to the central outflow duct.

10. Filter element according to one of Claims 1 to 9, **characterized in that** a middle tube (38) is provided, which penetrates through the annular filter element (12) one the entire axial length of the latter and which projects into the water storage space (31).

11. Filter element according to Claim 10, **characterized in that** the upper end cap (25) carrying the sealing ring (30) and the middle tube (38) are produced in one piece.

12. Filter element according to one of Claims 1 to 11, **characterized in that** it is installed into a filter housing (11), the bowl-shaped housing part (13) of which has the inflow connection (17) and, in particular, the outflow connection (19) and which is closed by means of a cover (15).

13. Filter element according to Claim 12, **characterized in that** the bowl-shaped housing part (13) has a bottom (18), on which the baseplate (35) of the storage housing (32) bears.

14. Filter element according to one of Claims 1 to 13, **characterized in that** the filter element (12) and the storage housing (32) have essentially the same outer contour, as seen in the axial direction.

15. Filter element according to Claim 12, **characterized in that** the bowl-shaped housing part (13) has arranged in it an outflow orifice (22) which is connected to the outflow connection (19) and which, as seen in the axial direction, lies above the sealing point (27) and below the cover (15).

16. Filter element according to one of Claims 1-15, **characterized in that** the storage housing (32) is connected unreleasably to the filter element (12).

## Revendications

1. Elément filtrant (12) pour carburants, notamment pour carburant diesel, permettant un montage échangeable dans le logement de filtre (11) d'une chambre de filtration (10) où il peut être placé entre un raccord d'entrée (17) et un raccord de sortie (19) de manière à ce que son coté propre soit relié à une chambre de réservoir d'eau (31) et dans lequel la matière filtrante disposée de manière annulaire s'écoule radialement de l'extérieur vers l'intérieur et est étanchée sur les deux faces frontales par des capots terminaux annulaires (25, 26),
**caractérisé en ce que**
la chambre de réservoir d'eau (31) est disposée dans un boitier de réservoir (32) séparé du logement de filtre (11) et monté sous l'élément filtrant (12) et **en ce que** le boitier de réservoir (32) forme conjointement avec l'élément filtrant (12) un module d'insertion (33, 50) disposé dans le logement de filtre (11) de manière interchangeable.

2. Elément filtrant selon la revendication 1,
**caractérisé en ce que**
l'élément filtrant (12) et le boitier de réservoir (32) sont collés directement l'un à l'autre, le boitier de réservoir (32) étant monté sur le capot (26) inférieur de l'élément filtrant (12).

3. Elément filtrant selon la revendication 1 ou 2,
**caractérisé en ce que**
la matière filtrante disposée de manière annulaire est un insert en étoile (24) s'écoulant radialement, dont le capot (26) inférieur coté face frontale forme également une paroi annulaire du boitier de réservoir (32) et entoure une ouverture centrale (36) par laquelle le coté propre (29) est relié à la chambre de réservoir d'eau (31).

4. Elément filtrant selon la revendication 3,
**caractérisé en ce que**
la paroi annulaire limite la chambre de réservoir d'eau (31) conjointement avec un segment (34) tubulaire raccordé et une plaque de fond (35) raccordée à ce dernier, le segment tubulaire (34) et la plaque de fond (35) formant notamment une partie du boitier en pot (51) dont le bord libre (52) est relié de manière étanche et fixe au capot inférieur (26).

5. Elément filtrant selon l'une quelconque des revendications 1 à 4,
**caractérisé en ce que**
la chambre de réservoir d'eau (31) présente essentiellement la forme d'un disque circulaire.

6. Elément filtrant selon l'une quelconque des revendications 1 à 5,
**caractérisé en ce que**
le boitier du réservoir (32) forme une chambre de réservoir d'eau (31) fermée qui n'est accessible que par l'ouverture centrale (36) dans le capot inférieur (26).

7. Elément filtrant selon une ou plusieurs des revendications 1 à 6,
**caractérisé en ce que**
le module d'insertion (33, 50) comporte une seule zone d'étanchéité (27, 30) sur sa périphérie extérieure afin de séparer dans le logement de filtre (11) le coté sale (28) relié au raccord d'entrée (17) et le coté propre (29) relié au raccord de sortie (19).

8. Elément filtrant selon la revendication 7,
**caractérisé en ce que**
la zone d'étanchéité (27) comporte une bague d'étanchéité (30) qui est disposée sur le capot (25) supérieur, éloigné du boitier du réservoir (32), de l'élément filtrant (12) coté face frontale.

9. Elément filtrant selon l'une quelconque des revendications 1 à 8,
**caractérisé en ce que**
l'élément filtrant (12) annulaire loge un insert de séparation (41) déviant l'eau sur sa face propre (29), notamment dans sa chambre intérieure (37) associée au canal d'évacuation central.

10. Elément filtrant selon l'une quelconque des revendications 1 à 9,
**caractérisé en ce qu'**
il est prévu un tube central (38) traversant l'élément filtrant (12) annulaire dans toute sa longueur axiale et faisant saillie dans la chambre de réservoir d'eau (31).

11. Elément filtrant selon la revendication 10,
**caractérisé en ce que**
le capot (25) supérieur portant la bague d'étanchéité (30) et le tube central (38) sont formés d'une seule pièce.

12. Elément filtrant selon l'une quelconque des revendications 1 à 11,
**caractérisé en ce qu'**
il est monté dans un logement de filtre (11) dont la partie de boitier (13) en forme de bol comporte le raccord d'entrée (17) et notamment le raccord de sortie (19) est fermé par un couvercle (15).

13. Elément filtrant selon la revendication 12,
**caractérisé en ce que**
la partie du boitier (13) en forme de bol comporte un fond (18) auquel est collée la plaque de fond (35) du boitier du réservoir (32).

14. Elément filtrant selon l'une quelconque des revendications 1 à 13,
**caractérisé en ce que**
l'élément filtrant (12) et le boitier du réservoir (32) présentent essentiellement le même contour extérieur, si on les regarde dans la direction axiale.

15. Elément filtrant selon la revendication 12,
**caractérisé en ce qu'**
un orifice de sortie (22) relié au raccord de sortie (19) et se trouvant au-dessus de la zone d'étanchéité (27) et en dessous du couvercle (15), quand on regarde dans la direction axiale, est disposé dans la partie du boitier (13) en forme de bol.

16. Elément filtrant selon l'une quelconque des revendications 1 à 15,
**caractérisé en ce que**
le boitier du réservoir (32) est relié à l'élément filtrant (12) sans pouvoir en être détaché.
